# EUROPEAN PATENT APPLICATION

(11) **EP 3 656 745 A1**
(43) Date of publication of application: **27.05.2020**
(21) Application number: 18835380.9
(22) Date of filing: 15.06.2018
(51) Int. Cl.: C03B 19/02, G04B 17/06

(54) **GLASS SHAPING METHOD AND GLASS-SHAPED ARTICLE FORMED BY SAID METHOD**

(30) Priority: 18.07.2017 JP 2017139192
(71) Applicant: Tecnisco Ltd., Tokyo 140-0004 (JP)
(72) Inventor: YOSHIOKA, Hokichi, Tokyo 140-0004 (JP); CHAMOTO, Shigeo, Tokyo 140-0004 (JP); KADOI, Takayuki, Tokyo 140-0004 (JP); OKUDA, Tetsuya, Tokyo 140-0004 (JP)
(74) Representative: Müller-Boré & Partner Patentanwälte PartG mbB
(86) International application number: PCT/JP2018/022963
(87) International publication number: WO 2019/017125

(57) **Abstract**

A glass shaping method capable of grinding and/or polishing a fine brittle material more stably than conventional methods is provided. The glass shaping method of the present invention comprises: a mold forming step of shaping a surface of a base material having a higher melting temperature than a glass softening point to form a mold 10; a glass molding step of sealing softened glass into a groove 15 formed in a surface of the mold 10 by the forming step to mold a glass substrate 17; a glass processing step of cutting, grinding and/or polishing the glass substrate 17, with the mold 10 being fixed, to form a glass shaped article 1; and a step of eliminating only the base material 16 of the mold 10 after the glass processing step to remove the glass shaped article 1 from the mold.

## Description

### Technical Field

This invention relates to a glass shaping method capable of performing precision machining, such as grinding and/or polishing, of molded glass; and a glass shaped article formed by this method.

### Background Art

When machining (i.e., mechanical processing), such as grinding and/or polishing, is applied to glass per se which is a brittle material, there have been limitations on the size of the material to be processed, or on the miniaturization of the material, owing to the brittleness of the material. For a complicated shape, moreover, processing itself has faced limitations.

To form such a fine glass product, a technology for forming fine glass by chemical processing is available. According to Patent Document 1, for example, a spring shaped like a power spring (or spiral spring), which is used for a clock or watch, is disclosed as a glass shaped article. Such a spring is produced in the following manner: Glass is ground and/or polished to form a glass sheet with a predetermined thickness. Then, the surface of the glass sheet is covered with a power spring-shaped mask. A glass portion of the glass surface, which has not been covered with the mask, is modified by UV irradiation and, after modification, is removed by selective etching. In this manner, a glass shaped article in the shape of a power spring is formed by chemical processing.

There is a technology for forming a fine ceramic shaped article from a ceramic, a brittle material like glass, with the use of a mold. Patent Document 2, for example, makes the following disclosure: To form a piezoelectric ceramic into a predetermined shape, a silicon mold is formed by providing a plurality of apertures on a silicon substrate by use of reactive ion etching. Then, a slurry containing a powder of a piezoelectric ceramic and a binder is coated on a surface of the silicon mold including the interior of the apertures, and the coating is dried. Then, the binder is removed, and the remaining product is pressurized at the sintering temperature of the piezoelectric ceramic to calcine the piezoelectric ceramic powder. After calcination, the silicon mold is etched away to form the fine-shaped piezoelectric ceramic into a predetermined shape.

### Prior Art Documents

### Patent Documents

Patent Document 1: Japanese Patent No. 5061117
Patent Document 2: Japanese Patent No. 4065049

### Summary of the Invention

### Problems to be solved by the invention

As described above, the technology of forming fine glass by UV irradiation is disclosed in Patent Document 1, and the technology of shaping a fine ceramic, a brittle material like glass, using a silicon mold is disclosed in Patent Document 2.

However, there is a case where the glass product formed by UV irradiation needs to be further ground and/or polished after UV irradiation, as in Patent Document 1. If an object to be ground and/or polished is fine like a glass spring for a wristwatch, the shaped article is apt to be damaged or scarred during a grinding and/or polishing operation, and its processing is difficult.

There is also a case where the ceramic shaped material formed from a calcined ceramic in Patent Document 2 needs grinding and/or polishing in order to be further formed into a shape different from the shape of the mold. In such a case as well, processing is difficult, particularly when the shaped article is fine, because the ceramic is a brittle material.

The present invention has been accomplished in the light of these circumstances. Its object is to provide a glass shaping method capable of grinding and/or polishing a fine brittle material more stably than conventional methods; and a glass shaped article formed by this method.

### Means for solving the problems

To attain the above object, the glass shaping method of the present invention includes a mold forming step of forming a mold having a concavity by use of a base material which does not deform at a higher temperature than the softening point of glass; a glass molding step of heating a glass substrate at a temperature equal to or higher than the softening point of glass, sealing softened glass or molten glass into the concavity of the mold, and cooling and solidifying the softened glass to mold the glass substrate; a glass processing step of performing machining, such as grinding and/or polishing, of the glass substrate together with the mold, or only the glass substrate, with the glass substrate being sealed in the concavity of the mold, to form a glass shaped article; and a mold elimination step of eliminating the remaining base material of the mold after the glass processing step to remove the glass shaped article from the mold.

In the glass molding step of the above glass shaping method, a surface of the glass substrate alone or together with the mold, the surface intersecting the depth direction of the concavity of the mold, is ground and/or polished, whereby the glass shaped article having the same planar shape as that of the surface intersecting the concavity can be formed.

According to the glass shaping method, the base material is preferably silicon and, in the mold elimination step, the mold is preferably eliminated by etching.

It is preferred that the base material of the glass shaping method be carbon and, in the mold elimination step, the mold be eliminated by burning.

The glass shaping method can include an additional glass molding step of grinding and/or polishing the glass substrate within the cavity, together with the remaining mold of the mold, after forming the cutting surface.

Herein, the term "softening point of glass" refers to a temperature at which glass softens and deforms under its own weight, and its viscosity reaches 10^{7.65}dpa•s. The expression "eliminating the base material of the mold" does not include removal by mere release of the molded product from the mold, but means that a part or all of the mold disappears physically or chemically. The term "softened glass" refers to glass in a state ranging from a state in which it has a softening point to a state before it melts 100%. The term "molten glass" refers to glass in a 100% molten state.

### Effects of the Invention

The glass shaping method of the present invention, as described above, includes the mold forming step of forming a mold having a concavity by use of a base material which does not deform at a higher temperature than the softening point of glass; the glass molding step of heating a glass substrate at a temperature equal to or higher than the softening point of glass, sealing softened glass or molten glass into the concavity of the mold, and cooling and solidifying the softened glass or molten glass to mold the glass substrate; the glass processing step of performing machining, such as grinding and/or polishing, of the glass substrate together with the mold, or only the glass substrate, with the glass substrate being sealed in the concavity of the mold, to form a glass shaped article; and the mold elimination step of eliminating the remaining base material of the mold after the glass processing step to remove the glass shaped article from the mold. Hence, the mold holds the glass substrate, thus enabling the fine glass or glass portion to be ground and/or polished with accurate precision. Consequently, cracking of or damage to the glass can be prevented.

By reducing the difference in thermal expansion between the glass and the mold of the base material, glass shaping with high dimensional accuracy can be performed.

### Brief Description of the Drawings

[Fig. 1A] is a plan view of a silicon mold for a power spring of a watch prepared in a first embodiment of the present invention, and [Fig. 1B] is a plan view of a glass power spring formed using the silicon mold in Fig. 1A.

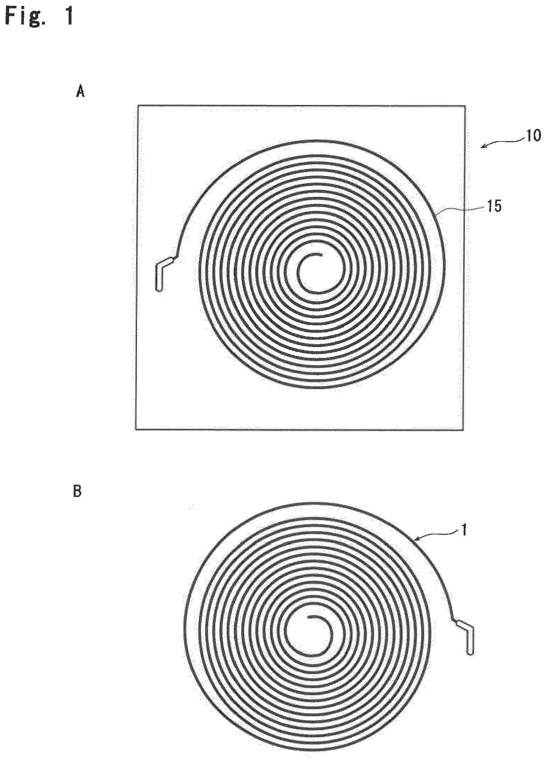

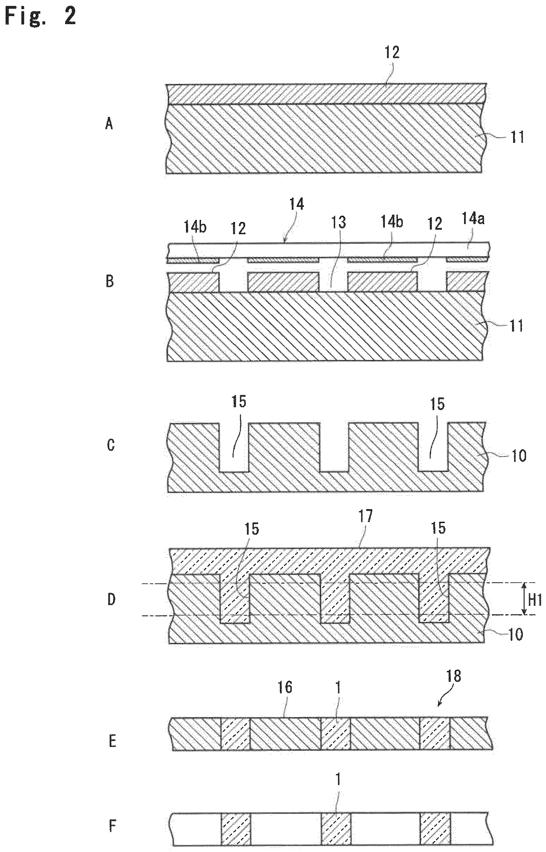

[Figs. 2A to 2F] are partial sectional views of a power spring shaping process using the silicon mold of Fig. 1A, Fig. 2A being a sectional view of a state in which a surface of a silicon plate has been coated with a resist film, Fig. 2B being a sectional view of a state in which a film groove has been formed in the resist film, Fig. 2C being a sectional view of a state in which the silicon plate has been etched to form a power spring groove, whereafter the resist film has been removed, Fig. 2D being a sectional view of a state in which softened glass has been sealed onto the surface of the silicon plate, Fig. 2E being a sectional view of a state in which the silicon mold has been ground and/or polished in a horizontal direction, and Fig. 4F is a sectional view of the power spring deprived of the silicon plate.
[Fig. 3A] is a plan view of a carbon mold for reticulated glass which is prepared in a second embodiment of the present invention, and [Fig. 3B] is a plan view of reticulated glass prepared using the carbon mold of Fig. 3A.

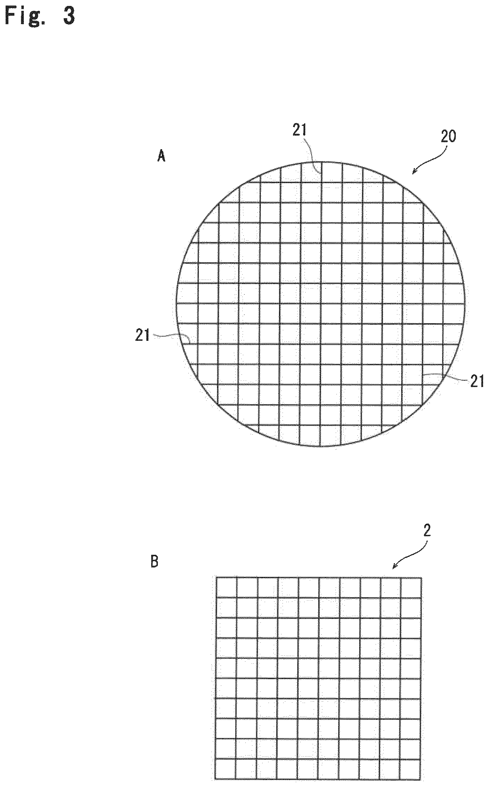

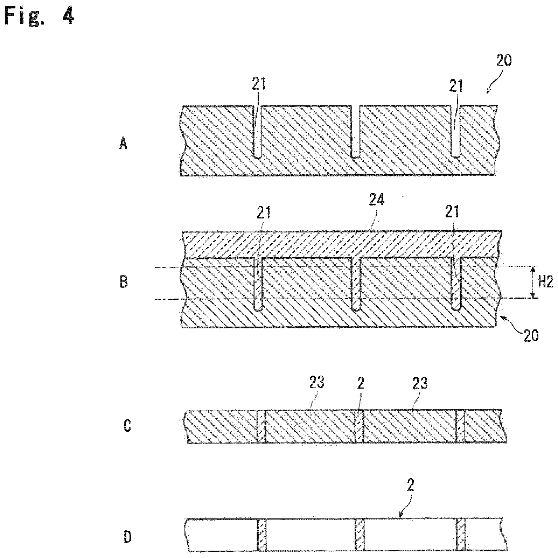

[Figs. 4A to 4D] are partial sectional views of a reticulated glass shaping process using the carbon mold of Fig. 3A, Fig. 4A being a sectional view of the carbon mold prepared by grooving a carbon plate in a reticulated pattern by means of a dicing saw to form grooves in the surface of the carbon plate, Fig. 4B being a sectional view of a state in which softened glass has been sealed onto the surface of the carbon, Fig. 4C being a sectional view of a state in which the carbon mold has been ground and/or polished in a horizontal direction, and Fig. 4D being a sectional view of the reticulated glass deprived of the carbon.
[Fig. 5] is a perspective view of a prism prepared in a third embodiment of the present invention.
[Fig. 6] is a plan view of a mold for forming the prism of Fig. 5, the mold having round holes formed in a wafer.

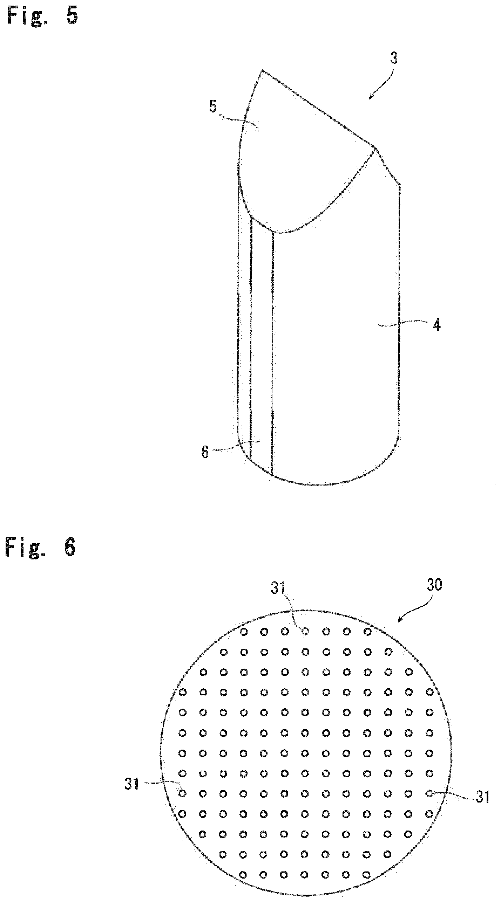

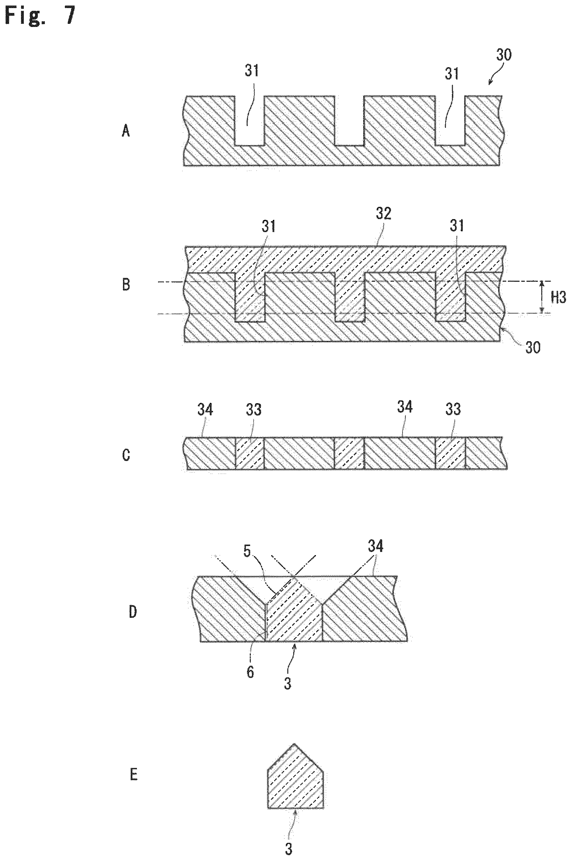

[Figs. 7A to 7E] are sectional views of a shaping process for the prism of Fig. 5, Fig. 7A being a sectional view of a silicon mold having holes formed in a silicon plate, Fig. 7B being a sectional view of a state in which softened glass has been sealed onto the surface of the mold, Fig. 7C being a sectional view of a glass substrate and remaining silicon after the silicon mold is ground and/or polished in a horizontal direction, Fig. 7D being a sectional view showing a state in which inclined surfaces of a prism portion have been formed, and Fig. 7E being a sectional view of the prism deprived of the silicon.

### Mode for Carrying Out the Invention

Hereinbelow, glass shaping in the first embodiment of the present invention will be described by reference to the accompanying drawings.

Fig. 1A is a plan view of a mold for a glass hairspring, and Fig. 1B is a plan view of the hairspring formed using this silicon mold. A mold 10 made of silicon is a mold for forming a glass hairspring (will hereinafter be referred to simply as a spring) 1. The spring 1 is designed to impart a correct cycle to a vibrating balance (not shown) of a wristwatch, and plays the role of determining the accuracy of the watch. In the present embodiment, the spring has a diameter of about 5 mm, a height of 0.1 mm, and a wall thickness of 0.04 mm, and is of a fine structure as a whole. The mold 10 for forming such a fine spring 1 is formed from silicon in the present embodiment.

Figs. 2A to 2F show a shaping process for the spring, and reveal only partial sections of the mold 10 and a silicon plate 11 as a base material. The mold 10 uses the silicon plate 11 of a constant thickness as the base material, as shown in Fig. 2A. The drawing shows a state in which a resist film 12 has been formed on the silicon plate 11. The resist film 12 at sites conformed to the planar shape of the spring 1 as the shaped article has been removed to form a film groove 13 of the spring shape. The film groove 13 is formed such that the depth direction of the groove is vertical to the mold 10.

To form the film groove 13, the resist film 12 is coated on the surface of the silicon plate 11. Then, a mask 14 is disposed above the resist film 12. The mask 14 is in a shape in which a chromium film 14b, for example, has been vapor-deposited on a transparent quartz substrate 14a, and portions where the chromium film 14b is absent are in conformity with the planar (cross-sectional) shape of the spring 1. From above the mask 14, the resist film 12 is exposed, for example, to ultraviolet radiation (UV), thereby forming a resist pattern. The resist film 12 is exposed to far ultraviolet radiation, electron beam, X-rays or the like, aside from ultraviolet radiation.

Upon exposure of the resist film 12, the exposed silicon plate 11 is dipped in a developing solution to remove the resist film in the exposed portions, as shown in Fig. 2B. During this course, the film groove 13 devoid of the resist film, the pattern of the spring, appears on the silicon plate 11.

Starting with the state shown in Fig. 2B, a hairspring(spiral)-shaped spring groove 15 is formed in the silicon plate 11 along the film groove 13 of the resist film 12, as shown in Fig. 2C, in accordance with the film groove 13 by anisotropic etching. After formation of the spring groove 15, the resist film 12 which remains on the silicon plate 11 is removed. By removing the resist film 12, the mold 10 as shown in Fig. 2C is formed. The width of the spring groove 15 formed in the mold 10 is 0.04 mm, the same dimension as the wall (plate) thickness of the spring 1, and the depth of the groove 15 is larger than the height of the spring 1. The mold 10 may be a single body for forming a single spring 1, or may be one for forming a plurality of the springs 1 side by side or longitudinal and lateral directions in the silicon plate. If the plurality of springs 1 are to be formed, they can be prepared in large amounts by repeated patterning (mold forming step).

After formation of the mold 10, glass is sealed onto the surface of the spring groove 15 of the mold 10, as shown in Fig. 2D. One of the methods for this purpose is to put the mold in a vacuum furnace, place a heat-resistant glass material on the mold, heat the interior of the vacuum furnace to a temperature equal to or higher than the softening point of the glass and, when the glass softens and deforms under its own weight, allow the softened glass to flow spontaneously into or come under pressure into the spring groove 15. Since the mold 10 does not deform at the softening point of the glass, the spring groove 15 serves for accurate molding. After the glass is sealed into the spring groove 15, the glass is cooled and solidified.

If the softened glass enters the spring groove 15 with difficulty, the softened glass may be pressurized. The mold 10 is formed with the spring groove 15, but may be provided with a through-hole instead of the groove. However, a closing member (or a closing means) is needed so that the softened glass will not flow out of the through-hole. After the softened glass is sealed into the spring groove 15, the softened glass is cooled and solidified.

### (Glass molding step)

Upon cooling and solidification of the softened glass or molten glass, the mold 10 holding the glass is set unchanged in a grinding machine and/or a polishing machine (not shown), without the release of the glass and the mold 10 from each other.

Then, a glass substrate 17 on the surface of the mold 10 shown in Fig. 2D is removed by grinding and/or polishing. Further, the surface and back of the mold 10 are ground and/or polished, and the silicon of the mold 10 and the glass in the spring groove 15 are surface-ground and/or surface-polished until a thickness corresponding to the height H1 of the spring 1 is reached. At this time, the glass layer overlapping the surface of the mold 10 is ground and/or polished and, at the site of the spring groove 15, the silicon base material of the mold 10 is also ground and/or polished. On this occasion, the glass in the spring groove 15 is held in intimate contact with the silicon of the mold 10. This is the same situation as where the glass and the silicon are ground and/or polished overall as an integrated material. Under this situation, a shearing force is minimally exerted on portions other than the ground and/or polished portions of the glass. As a result, the glass is not bent, so that no bending moment occurs in the glass. Hence, cracking or breakage of the glass is prevented. In these respects, the material for the mold is preferably one which can hold glass and which is easy to process. To grind and/or polish glass, a diamond grindstone or the like can be used.

Fig. 2E shows an integrally molded article 18 composed of the spring 1, as a glass shaped article formed with a height of 0.1 mm, and remaining silicon 16 after grinding and/or polishing of the mold 10. In the present embodiment, the shaped article is the spring 1, and thus the integrally molded article 18 after grinding and/or polishing is formed to be flush (with the same thickness). Depending on the shaped article, however, the article 18 may have the different parts different in height, or may have a shoulder after grinding and/or polishing. (Glass processing step)

Fig. 2F is a sectional view of the spring 1 devoid of the remaining silicon of Fig. 2E. In this drawing, only the remaining silicon (remaining base material) 16 resulting from the mold 10 is eliminated by selective etching. To eliminate the silicon by etching, the present embodiment uses TMAH (tetramethylammonium hydroxide) as an etching agent to eliminate the remaining silicon, thereby forming the spring 1 as shown in Fig. 1B. (Mold elimination step)

As is well known, glass is a hard material and easily breakable, and is not an easy material when grinding and/or polishing a micro-component as a single body for the purpose of shaping. However, the glass alone is not ground and/or polished, but the glass, together with the mold 10, is ground and/or polished. Thus, the glass is held integrally with the silicon and, even if a shearing force is applied during grinding and/or polishing, damage to the glass material having brittleness can be prevented. Higher precision grinding and/or polishing as well as cutting of glass can be achieved.

A hairspring for a watch has been prepared as above, but the present invention is also applicable to the manufacture of gears for watches or precision components of other products.

Next, glass shaping in the second embodiment of the present invention will be described by reference to the accompanying drawings.

Fig. 3A is a plan view of a mold formed from a wafer-shaped carbon plate, and Fig. 3B is a plan view of reticulated glass prepared using this mold. A mold 20 made of carbon is a mold for forming reticulated glass 2 made of glass. The reticulated glass 2 has a lattice mesh width of 0.03 mm, and a height of 1 mm.

Figs. 4A to 4D show a shaping process for the reticulated glass 2, illustrating the mold 20, the reticulated glass 2, etc. only partially. The mold 20 uses a carbon plate as a base material, which is grooved in longitudinal and lateral directions by means of a dicing saw or the like to form reticulated grooves 21. (Mold forming step)

After formation of the mold 20, glass is sealed onto the surface of the mold 20, as shown in Fig. 4B. One of the methods for this purpose is to put the mold 20 in a vacuum furnace, place a heat-resistant glass material on the mold, heat the interior of the vacuum furnace to a temperature equal to or higher than the softening point of the glass and, upon softening of the glass, allow the softened glass to flow spontaneously into or get under pressure into the reticulated grooves 21. Since the mold 20 does not deform or melt at the softening point of the glass, the reticulated grooves 21 are free from deformation. (Glass molding step)

Upon cooling and solidification of the softened glass, the mold 20 holding a glass substrate 24 is set unchanged in a grinding machine and/or a polishing machine (not shown), without releasing the glass and the mold 20 from each other. Then, as shown in Fig. 4C, the glass on the surface of the mold 20 is removed by grinding and/or polishing, and the surface and back of the mold 20 are further ground and/or polished. That is, the mold 20 and the glass substrate 24 in the reticulated grooves 21 are surface-ground and/or surface-polished until they reach a thickness H2 corresponding to the height of the reticulated glass 2. At this time, the glass layer overlapping the surface of the mold 20 is ground and/or polished and, at the sites of the reticulated grooves 21, the carbon base material of the mold 20 is concurrently ground and/or polished. The glass in the reticulated grooves 21 is in integrally intimate contact with the carbon of the mold 20. Hence, neither a shearing force nor a bending moment occurs in the portions where the glass is held. As a result, damage to the glass is prevented. To grind and/or polish the glass, a diamond grindstone or the like can be used. Fig. 4C shows the reticulated glass 2 as a glass shaped article, and remaining carbon 23 after grinding and/or polishing of the mold 20. (Glass processing step)

Fig. 4D is a sectional view of the reticulated glass devoid of carbon. In this drawing, only the remaining carbon (remaining base material) 23 resulting from the mold 20 has been selectively eliminated. To eliminate the carbon, which itself burns, the carbon is burnt off in a combustion furnace, whereby the remaining carbon 23 can be eliminated. (Mold elimination step)

Next, glass shaping in the third embodiment of the present invention will be described by reference to the accompanying drawings.

Fig. 5 shows a fine prism 3. The prism 3 is used as a component of a camera for medical use. The prism 3 is composed of a nearly cylindrical body 4, a prismatic portion 5 at the leading end, and a positioning portion 6 formed at the side of the body. Such a prism is prepared by a mold 30 formed from a silicon wafer as shown in Fig. 6.

Figs. 7A to 7D show a shaping process for the prism, and partially illustrates the mold 30 made of the wafer, etc. The mold 30 uses a wafer of a constant thickness as a base material, which is formed into the mold 30 having in the wafer bottomed round holes 31 for forming the prisms. The inner diameter of the round hole 31 is a dimension corresponding to the outer diameter of the body of the prism 3. The round hole 31 is formed so that the axis of the round hole 31 faces in a direction at right angles to the wafer surface.

To form the fine round hole 31, a diamond drill can be operated on the silicon wafer, thereby forming the round hole. In the same manner as in the aforementioned first embodiment, a resist film is formed, and the round hole can be formed, using photolithography.

If only one of the prisms 3 is to be formed, it is sufficient to form one of the round holes. (Mold forming step)

After formation of the mold 30, glass is sealed onto the surface of the mold 30, as shown in Fig. 7B. One of the methods for this purpose is to put the mold in a vacuum furnace, place a heat-resistant glass material on the mold, heat the interior of the vacuum furnace to a temperature equal to or higher than the softening point of the glass and, upon softening of the glass, allow the softened glass to flow spontaneously into or come under pressure into the round hole 31. Since the mold 30 does not soften at the softening point of the glass, the round hole 31 does not deform. (Glass molding step)

Upon cooling and solidification of the softened glass on the mold 30, the mold 30 holding the glass is set unchanged in a fixing part of a grinding machine and/or a polishing machine (not shown), without releasing the glass and the mold 30 from each other.

Then, as shown in Fig. 7C, the glass on the surface of the mold 30 is removed by grinding and/or polishing, and the surface and back of the mold 30 are further ground and/or polished. As a result, the mold 30 and the round hole 31 are surface-ground and/or surface-polished until they are reduced to a thickness H3 corresponding to the height of the prism 3. At this time, a glass substrate 32 overlapping the surface of the mold 30 is ground and/or polished and, at the site of the round hole 31, the silicon base material of the mold 30 is concurrently ground and/or polished. On this occasion, the glass in the round hole 31 is held in intimate contact with the silicon of the mold 30. Hence, the glass minimally undergoes a shearing force or bending stress, and is prevented from being damaged. To grind and/or polish the glass, a diamond grindstone or the like can be used. (Glass processing step)

Fig. 7C shows cylindrical glass formed with a height of 2 mm and remaining silicon after grinding and/or polishing of the mold 30. As shown by dashed double-dotted lines in Fig. 7D, in order to form a prism from cylindrical glass 33, inclined surfaces of the prism portion 5 are formed in an upper end part of the cylindrical glass 33. The inclined surfaces having a desired angle are formed so as to extend rightward and leftward from above to below, with a diameter passing through the central axis of the cylindrical glass 33 being taken as a center line. In forming the inclined surfaces, the cylindrical glass 33 and remaining silicon 34 are simultaneously ground in a V-shape by means of a grinding blade. At this time as well, the remaining silicon 34 is fixed to a grinding machine (not shown) and can be ground. In this manner, the prism portion having two surfaces are formed in the upper end part of the cylindrical glass 33. Even when ground, the cylindrical glass 33 is in integrally intimate contact with the remaining silicon 34 of the mold 30. Hence, a shearing force or bending stress minimally acts, and the fine glass can be ground without damage.

Then, the positioning portion 6 of the prism 3 is formed by grinding. During grinding for formation of the positioning portion 6, the outer peripheral surface of the body 4 of the prism 3 is axially ground, together with the remaining silicon 34, to form a flat surface. (Additional glass processing step)

Fig. 7E is a sectional view of the prism 3 devoid of silicon. Only the remaining silicon (remaining base material) 34 resulting from the mold 30 is eliminated by selective etching. To eliminate the silicon by etching, the present embodiment uses TMAH as an etching agent to eliminate the remaining silicon 34, thereby forming the prism as shown in Fig. 5. (Mold elimination step)

The relationship between the mold and the glass holds under conditions such that the mold does not soften (deform) or melt at a temperature equal to or higher than the softening point of the glass. Preferably, the mold is made of a material having a coefficient of linear expansion close to that of the glass, the material to be shaped.

The softening point of heat-resistant glass is 820°C, and high-melting metals, such as Ti, Mo, W and Pt, can be used in addition to silicon and carbon, as materials for the mold having a higher melting temperature than the softening point of glass. A metal mold, in particular, is advantageous in that a glass shaped article can be easily taken out as a single body, since the mold is eliminated by selective etching. The melting temperature of the material for the mold differs according to type, and is 1414°C for Si, 3370°C for carbon, 1668°C for Ti, 2623°C for Mo, 3387°C for W, and 1772°C for Pt.

The coefficient of linear expansion of glass usable as a base material is 3.3×10⁻⁶/°C for non-alkali glass (Tempax, a registered trademark of Schott AG), 9.0×10⁻⁶/°C for soda-lime glass, and 7.2×10⁻⁶/°C for D263 (produced by Schott AG).

The coefficient of linear expansion of the material usable as the mold is 3.9×10⁻⁶/°C for Si, 3.3×10⁻⁶/°C for carbon, 8.8×10⁻⁶/°C for Ti, 5.1×10⁻⁶/°C for Mo, 4.5×10⁻⁶/°C for W, and 9.0×10⁻⁶/°C for Pt.

The present invention can heat glass to a temperature equal to or higher than the softening point of glass, pour the softened glass into the mold, and machine the so molded fine glass to form a glass shaped article.

However, the difference in the coefficient of thermal expansion between the glass and the base material should preferably be minimal from the viewpoint of precision. A combination of the glass and the mold similar in the coefficient of thermal expansion brings the effect of performing glass shaping with high dimensional accuracy, and the effect of preventing damage to glass due to the difference in thermal expansion.

According to the foregoing first to third embodiments, glass is heated to a temperature equal to or higher than the softening point, and the softened glass is sealed into the spring groove 15, the reticulated grooves 21, or the round hole 31. Even when molten glass is sealed into the spring groove 15, reticulated grooves 21, or round hole 31, however, the spring 1, reticulated glass 2, or prism 3 can be produced in the same manner as for the softened glass. In this case, the glass needs to be molded at a temperature equal to or lower than a temperature at which the mold does not deform. In the case of the molten glass, the difference in thermal expansion between the glass and the mold becomes greater than when the softened glass is sealed in.

The present invention has been described in detail above based on the embodiments by reference to the accompanying drawings. However, the present invention is not limited to these embodiments, but other changes or modifications can be made without departing from the scope of the present invention.

In the third embodiment, for example, the mold 30 is formed from silicon. However, a prism of the same configuration as above can be formed, even if the mold is carbon instead of silicon. In the second embodiment, the mold 20 is formed from carbon. However, reticulated glass of the same configuration as above can be formed, even if the mold is silicon instead of carbon.

The above embodiments exemplify grinding and/or polishing as the machining of the glass substrates 17, 24, 32 contained in the remaining molds 16, 23, 34. However, other processing technologies such as cutting are also included in the machining. As machine tools for performing such processing technologies, there can be used, for example, a lathe, a drilling machine, a boring machine, a milling machine, a grinding machine, a gear cutting machine, a numerically controlled machine tool, and a dicing saw.

In the glass processing step, the glass substrate is processed together with the mold 10, 20 or 30. However, only the glass substrate can be processed.

### Explanations of Letters or Numerals

- 1: Spring
- 2: Reticulated glass
- 3: Prism
- 10, 20, 30: Mold
- 11: Silicon plate
- 12: Resist film
- 13: Film groove
- 14: Mask
- 15: Spring groove
- 16, 34: Remaining silicon (remaining base material)
- 17, 24, 32: Glass substrate
- 21: Reticulated groove
- 23: Remaining carbon (remaining base material)
- 31: Round hole
- 33: Cylindrical glass

## Claims

1. A glass shaping method, comprising:
a mold forming step of forming a mold having a concavity by use of a base material which does not deform at a higher temperature than a softening point of glass;
a glass molding step of heating a glass substrate at a temperature equal to or higher than the softening point of glass, sealing softened glass or molten glass into the concavity of the mold, and cooling and solidifying the softened glass or molten glass to mold the glass substrate;
a glass processing step of performing machining, such as grinding and/or polishing, of the glass substrate together with the mold, or only the glass substrate, with the glass substrate being sealed in the concavity of the mold, to form a glass shaped article; and
a mold elimination step of eliminating the remaining base material of the mold after the glass processing step to remove the glass shaped article from the mold.

2. The glass shaping method according to claim 1, wherein
in the glass molding step, a surface of the glass substrate alone or together with the mold, the surface intersecting a depth direction of the concavity of the mold, is ground and/or polished, whereby the glass shaped article having a planar shape identical with that of the surface intersecting the concavity is formed.

3. The glass shaping method according to claim 1 or 2, wherein
the base material is silicon, Ti, Mo, W or Pt and, in the mold elimination step, the mold is eliminated by etching.

4. The glass shaping method according to claim 1 or 2, wherein
the base material is carbon and, in the mold elimination step, the mold is eliminated by burning.

5. The glass shaping method according to any one of claims 1 to 4, further comprising
an additional glass processing step of grinding and/or polishing the glass substrate within the cavity, together with the remaining mold of the mold, after forming a ground and/or polished surface.

6. A glass shaped article formed by the glass shaping method according to any one of claims 1 to 5.
